# EUROPEAN PATENT APPLICATION

(11) **EP 3 930 132 A1**
(43) Date of publication of application: **29.12.2021**
(21) Application number: 20182678.1
(22) Date of filing: 26.06.2020
(51) Int. Cl.: H02J 1/08, F02N 11/08, H02J 7/34, B60R 16/03, B60L 1/00, B60L 3/00, B60L 50/61, B60L 50/16, B60L 58/20

(54) **A CONNECTION INTERFACE BETWEEN A HIGH VOLTAGE NETWORK AND A LOW VOLTAGE NETWORK OF A HYBRID ELECTRIC VEHICLE**

(71) Applicant: VOLVO TRUCK CORPORATION, 405 08 Göteborg (SE)
(72) Inventor: MAGNET, Christophe, 69360 Solaize (FR)
(74) Representative: Plasseraud IP

(57) **Abstract**

The invention relates to a connection interface (20, 22) between a high voltage network and a low voltage network of a hybrid electric vehicle, said connection interface comprising a bidirectional DC/DC converter (20) for transferring power from the high-voltage network to the low-voltage network, and inversely. The connection interface further includes a bridge (22) for bypassing the DC/DC converter (20), said bridge being connected in parallel to the DC/DC converter and said bridge comprises an electronically controlled switching device (24).

## Description

### TECHNICAL FIELD

The invention relates to a connection interface between a high voltage network and a low voltage network of a hybrid electric vehicle.

The invention can be applied in medium-duty and heavy-duty vehicles, such as trucks, buses and construction equipment. Although the invention will be described with respect to a truck, the invention is not restricted to this particular vehicle, but may also be used in other vehicles such as passenger cars.

### BACKGROUND

Most of the vehicles in use worldwide are still powered by an Internal Combustion Engine (ICE), either gasoline/petrol or diesel. A Hybrid Electric Vehicle (HEV) has at least two sources of power for propulsion: The internal combustion engine and an electric motor.

There are three main reasons for which HEVs are being manufactured and sold:
- reduction of the CO2 emissions (by reduction of the fuel consumption);
- reduction of the exhaust gas toxic emissions; and
- improvement of the powertrain dynamics (by increasing total power and torque).

The HEV's include Mild Hybrid (or Micro-Hybrid), Full-Hybrid and Plug-in Hybrid vehicles. A Mild-Hybrid Electric Vehicle (MHEV) has four main components:
- an electric machine ;
- an inverter (usually integrated with the electric machine);
- a DC to DC converter; and
- a high voltage battery.

The electric machine replaces the starter and generator of a conventional powertrain. Today, the trend in the automotive industry is to equip the Mild-Hybrid Electric Vehicles with 48V operated electric machines, as such higher electrical power machines bring new possibilities for the vehicle operation, in particular regenerative braking.

Typically, a HEV can include a 48V network and a 24V network. The 48V network includes the electric machine and the 48V battery, which is essentially used for regenerative braking. Also, the 48V battery can also be used to power some electrical auxiliaries of the vehicle, such as the air conditioning system or the power steering system. The 24V network is used to power other electric auxiliaries of the vehicle, which require less energy to function, such as the headlamps. In this respect, the 24V network includes a 24V battery, typically a Lead-Acid battery.

Basically, the power steering system can include a hydraulic system in which the hydraulic pump is electrically driven (by a E-motor). Such E-motor is relatively powerful and needs to powered from the high-voltage network.

A connection interface is provided between the high-voltage network and the low-voltage network, said connection interface comprising the bidirectional DC/DC converter for transferring power from the high-voltage network to the low-voltage network, and inversely. Basically, the DC/DC converter is used for charging the 24V network from the 48V battery and enables the 24V network to assist the 48V network during consumption peaks of the 48V electrical loads.

One advantage of having an electrical system with two different networks is that one of the network can take over when the other network is down, or malfunctioning. However, this is not so easy to implement when the high-voltage network is defective. Indeed, the high-voltage battery is normally used to power some critical auxiliaries, such as the power steering system of the vehicle and the DC/DC converter cannot deliver an output power that would be sufficient to keep the power steering system operational. For example, the maximum power that the DC/DC converter can deliver is about 3kW (at a voltage of 48V), while the power steering system can require 5 kW.

According to another case scenario, there would be a need to have some 48V electrical auxiliaries that can be still be powered when the engine is off. Typically, truck's driver often use the air conditioning system at night when they sleep inside the cabin. However, the 48V battery, which is primarily recharged when the engine is running, may be low-charged at the time the engine has been switched off, so that the 48V battery would not be able to keep the AC system working all night. An idea would be then to transfer power from the low-voltage network through the DC/DC converter. However, voltage conversion inside the DC/DC converter involves some energy loss, so that this is probably not the best solution in terms of energy savings.

Accordingly, there is a need to develop a backup system to be able to keep powering some critical auxiliaries connected to the high-voltage network even when the high-voltage network is disabled.

KR 2018 0 074 300 A discloses a solution to integrate a DC-to-DC converter inside a battery pack of a 48V mild hybrid vehicle. The DC-to-DC converter is arranged between a 48V battery and a 12V battery. The DC-to-DC converter includes a switching auxiliary, e.g. a MOSFET, instead of a reflux diode, which enables the DC-to-DC converter to work in both directions (bidirectional converter). However, the DC-to DC converter cannot be bypassed, which means that the low voltage battery cannot be used to power up some critical 48V loads in case of failure of the 48V power supply.

EP 2 160 813 B1 discloses a motor vehicle electrical system with a first branch (branch 1), which contains a voltage source and a first "critical" consumer, such as a motor starter, and a second branch (branch 2) to which are connected a bunch of "sensitive" consumers (consumer group B), such as entertainment auxiliaries. The two electrical branches are coupled together by a DC-DC converter, which can be bridged (by-passed) by a first switching auxiliary S1. Activation of the motor starter (start) results in a strong voltage drop in the first branch. This does not affect the second branch since the first switching auxiliary S1 is simultaneously opened. After deactivation of the motor starter, the voltage U1 of the first branch gets stabilized again and the first switching auxiliary S1 returns to a closed state. The second branch (branch 2) may include an energy storage ES2, such as a capacitor or super capacitor, which can be charged by means of the DC-DC converter from the first branch. Therefore, the objective here is to protect sensitive electrical loads during the activation of the engine starter, which is different from using a low voltage network to supply high voltage consumers.

EP 2 184 212 B1 discloses a method for controlling the electric powering machine of a hybrid vehicle in case of failure of the battery pack. The method consists in utilizing the generating capability of the electric machine to enable continued vehicle operation after the battery pack is disconnected from the high voltage bus. Therefore, under fault conditions that require or result in battery pack disconnection, the electric machine control for enabling continued operation of the vehicle is carried out by bypassing the usual torque-based control, and for directly determining the synchronous vector current required to achieve the control objective.

EP 3 561 982 A1 discloses an automobile power redundancy system 100 which includes both of a 12 V power supply system and a 48 V power supply system. A DC/DC converter 200 is installed between 12 V power supply system and 48 V power supply system, which intends to make the power supply redundant by mutual power exchange. The power supply redundancy system 100 further includes a first switch 160, a second switch 170, a capacitor 180, and a control unit 190, in order to supply power to the 48 V backup load(s) even when a ground fault or a short circuit occurs in the 48 V battery. In a normal state, the first switch 160 and the second switch 170 are closed, the DC/DC converter 200 performs an operation of stepping down 48 V to 12 V, and supplies electric power from the 48 V power supply system to the 12 V power supply system. When determining that an abnormality has occurred in the 48 V battery 130, the control unit 190 turns off the first switch 160. As a result, the 48 V battery 130 is separated from the converter DC/DC 200. Further, the second switch 170 is switched off. In this state, the 48 V backup load 150 is powered by capacitor 180, therefore, the instantaneous interruption of the 48V backup load 150 can be prevented.

### SUMMARY

An object of the invention is to provide a connection interface configured so that some critical electrical consumer(s) of the high voltage network, such as the power steering system, remain fully operational even in case of failure of the high voltage network.

The object is achieved by a connection interface according to claim 1.

By the provision of a connection interface which comprises a bridge arrangement for bypassing the DCDC converter, a direct connection can be established between the low voltage network and the high voltage network when the high voltage network has failed. The advantage of bypassing the DCDC converter is that the energy that can be directly drawn from the low voltage network has a stable voltage, which would be difficult/impossible to get with the DCDC converter. The energy transferred from the low voltage network to the high voltage network allows to absorb the possible consumption peaks of some critical electrical consumers (or components) connected to the high voltage battery. The thing is that the DCDC converter cannot, alone, deliver a stabilized power at the voltage level required by the high voltage network (48V for instance). Instead, it is preferable to deliver a stabilized power at the voltage level of the low voltage network. This is possible only because the critical components to which it is referred to above are compatible with the low voltage network, i.e. can be operated from such voltage supply. In other words, it is preferable to supply said critical component(s) with a stable power supply at low voltage than with an unstable power supply at high voltage, which makes sense.

Further advantages and advantageous features of the connection interface are disclosed in the dependent claims 2 to 6.

The invention also concerns an electrical system for a hybrid electric vehicle, as defined in claim 7. Claims 8 to 10 define advantageous, but optional features of the electrical system.

The invention also concerns an Electric Vehicle according to claims 11 to 13.

Advantageously, the electric machine is mechanically connected to the engine crankshaft of the vehicle.

The electric machine is preferably used to crank the engine.

Advantageously, the vehicle includes neither a starter, nor an alternator.

Eventually, the invention concerns a method according to claim 14, for controlling the electrical system as described above.

### BRIEF DESCRIPTION OF THE DRAWINGS

With reference to the appended drawings, below follows a more detailed description of embodiments of the invention cited as examples.

In the drawings:
Fig. 1 is a perspective view of a hybrid electric vehicle, typically a truck, comprising an electrical system according to the invention;
Fig. 2 represents schematically the electrical system of the invention, with a low-voltage network, a high voltage network and a connection interface in-between;
Fig. 3 is a detailed scheme of the connection interface, comprising a DC/DC converter and switching device connected in parallel to the converter;
Fig. 4 to 6 are schemes representing three different operation modes, in which the switching device is in three different configurations;
Fig. 7 is a scheme similar to that of figure 2, representing a first alternative embodiment of the invention; and
Fig. 8 is a scheme similar to that of figure 3, representing a second alternative embodiment of the invention.

### DETAILED DESCRIPTION OF EXAMPLE EMBODIMENTS OF THE INVENTION

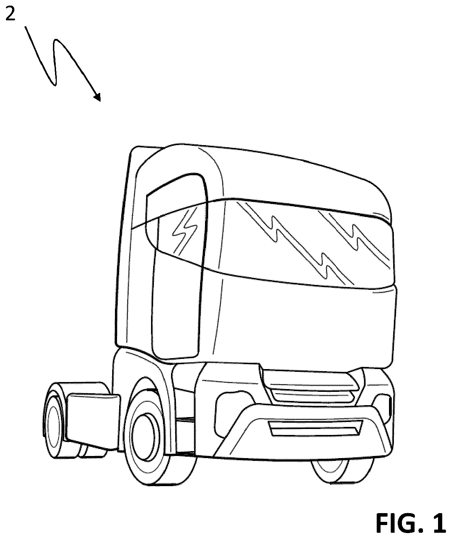

Figure 1 shows a vehicle, typically a heavy-duty vehicle 2. In the example, the vehicle 2 is a rolling vehicle, in particular a truck.

The vehicle 2 is a Hybrid Electric Vehicle (HEV). Typically, the vehicle 2 is a Mild-Hybrid Electric Vehicle (MHEV). This means that, in comparison with a traditional thermal vehicle, the mild hybrid electric vehicle 2 further enables to perform additional functions, such as regenerative braking. Regenerative braking consists in switching an electric machine on-board the vehicle 2 in generator mode when the driver depresses the brake pedal, in order to create a resistive torque on the driveline and mechanically slow down the vehicle. Meanwhile, the energy recovered is stored in a high-voltage battery.

This also means that the vehicle 2 includes an Internal Combustion Engine, or ICE (not shown), for example a Diesel engine or a Gasoline engine.

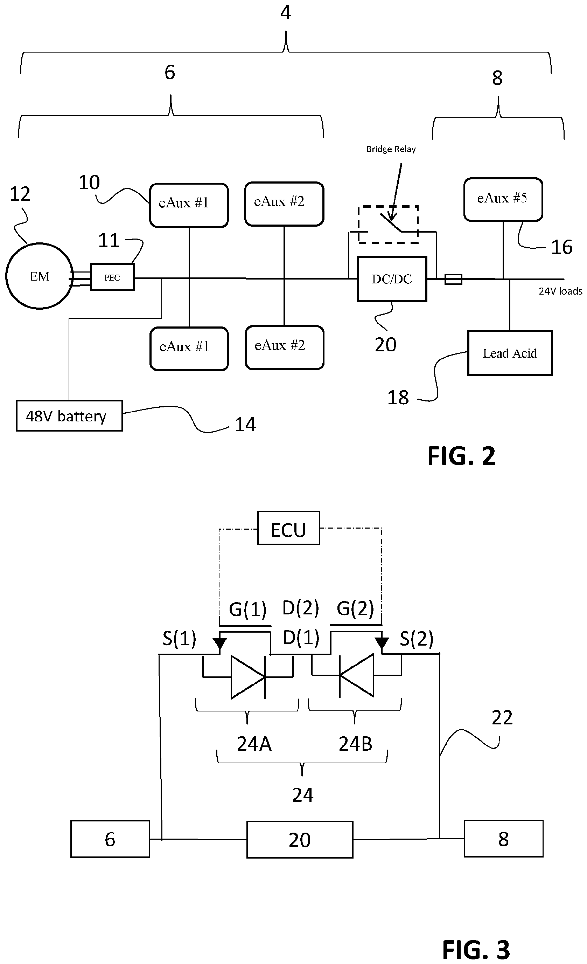

As shown on figure 2, the vehicle 2 includes an electrical system 4 comprising a high-voltage network 6 that includes at least one electric consumer 10, such as the power steering system, and a low-voltage network 8 comprising at least one other electric consumer 16, such as the headlamps.

In the example, the high-voltage network 6 includes more than one electric consumer 10: There are many other electric consumers, such as the Air conditioning system, the compressor and so on. For the record, the electric consumers can also be known as electric "auxiliaries", "devices" or "loads". On figure 2, the electric auxiliaries are referenced "eAux#1", "eAux#2", etc.

The high-voltage network 6 comprises an Electric Machine (EM) 12 and a high-voltage battery 14. Basically, the battery voltage of battery 14 ranges from 48V to 160V. Battery 14 is preferably a Lithium-ion or Nickel-metal battery. In the example, the high-voltage network 6 is a 48V network, which means that the battery 14 is a 48V battery.

The high-voltage battery 14 is used to power each electric consumer 10 of the high-voltage network 6. In other words, each electric consumer(s) 10 is connected to the high voltage battery 14.

In the example, the electric machine 12 is arranged on the front face of the thermal engine, which corresponds to the position known as "P0". P0 corresponds to the position along the crankshaft, opposite to the gearbox. Further, the electric machine 12 is advantageously mechanically connected to the engine crankshaft, for example through a belt or a chain.

There are several operating modes:
- Electric driving mode: Only the electric machine 12 propels the vehicle, being powered by the high voltage battery 14, the internal combustion engine being switched off.
- Hybrid driving mode: The electric machine 12 and the internal combustion engine jointly propel the vehicle.
- Thermal driving: the ICE propels alone the vehicle, without the assistance of the electric machine 12. In such configuration, the electric machine 12 can be operated as a generator.
- Braking: During the deceleration and braking phases, the internal combustion engine is switched off, the electric machine 12 brakes the vehicle, acting as a generator (regenerative braking) which recharges the battery 14.

Advantageously, the electric machine 12 can be used to crank the ICE. In variant, the vehicle may be additionally equipped with a starter (not shown) to crank the engine.

The electric machine 12 can also be known as "E-machine" or "Belt-Integrated Starter Generator (BISG)". It can be an asynchronous or a synchronous electric machine. It has two main functions, which are to provide torque to the powertrain in motor mode and produce electricity in generator mode.

Preferably, the electric machine 12 is a 3-phase Alternating Current (AC) electric machine with an AC/DC inverter 11. The inverter 11 has two roles which is, first, to convert the direct current (DC) supplied by the battery 14 in AC, to power the electric machine 12 when it is in motor mode and, second, to convert the AC generated by the electric machine 12 (in generator mode) to DC, which can be stored in the battery 14 (for example during braking phases).

In the example, the electric machine 12 can be controlled to generate electric power at said high voltage (48V) or said low voltage (24V).

Normally, the electric machine 12 is not supposed to be used as a power source for the electric auxiliaries 10 of the high voltage network 6: It is the role of the battery 14. When the EM 12 works as a generator, the electricity that is produced is used to recharge the battery 14.

The second electrical network comprises a low-voltage battery 18. The low-voltage battery 18 is preferably a Lead-Acid battery. In the example, the low-voltage network 8 is a 24V network, which means that the battery 18 is a 24V battery. In a variant not shown, the low-voltage network could be a 12V network.

Normally, each electric consumer 16 of the low voltage network 6 is powered using the energy stored into the low voltage battery 18.

In the example, the low-voltage network 8 includes more than one electric consumer 16: There are many other electric consumers, or auxiliaries that are connected the low-voltage battery 18, such as the power windows, rear-view mirrors and so on.

In variant, the vehicle can be equipped with an alternator arranged in P0 position. Accordingly, the electric machine 12 would be arranged somewhere else, for example in the position "P3", as described in the patent application N° PCT/EP2019/082620, which is incorporated herein by reference. The alternator could be used to recharge the low voltage battery 18 and power the electric consumer(s) 16.

The electric system 4 further includes a connection interface between the high-voltage network 6 and the low-voltage network 8, said connection interface comprising a bidirectional DC/DC converter 20 for transferring power from the high-voltage network 6 to the low-voltage network 8, and inversely. Indeed, electrical energy can be produced only by the 48V e-machine 14, which means that a DCDC converter is needed to transfer energy from the 48V network to the 24V network.

Normally, this DCDC converter 20 is used to recharge the low voltage battery 18 by drawing energy from the high voltage network 6.

The DCDC converter 20 can be operated in buck-mode (step down), when converting high voltage to low voltage (48 V to 24 V) or in boost-mode (step up), when converting low voltage to high voltage (24 V to 48 V).

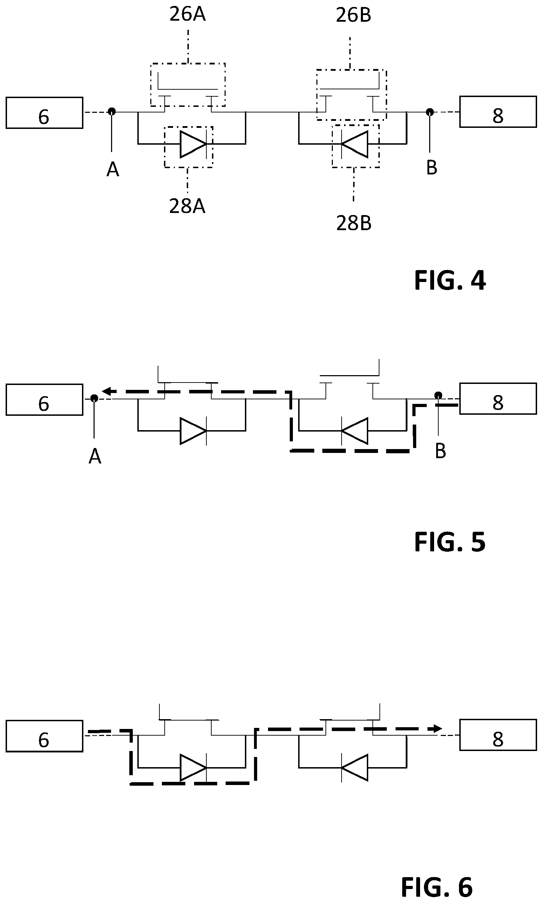

For the clarity of the drawings, the DC/DC converter 20 is not represented on figures 4 to 7.

Broadly speaking, what is referred to in this paper as the « high-voltage network » has an operational voltage complying with the ISO 21780 regulation. The voltage of this high voltage network can be ranged from 20V to 54V. A lower portion of this range (between 20 to 28V) is known as the "limited performance area". Nevertheless, this limited performance area copes with the 24V network (i.e. the "low-voltage network" in this paper) which can be operated up to 28V or 30V, without damaging the device(s) that are part of it. This means that the operating voltage range of the high-voltage network 6 partly overlaps with that of the low-voltage network 8.

Then, a direct backup connection can be established between the two electrical networks 6 and 8. In this respect, the connection interface further includes a bridge 22 for bypassing the DC/DC converter 20, said bridge 22 being connected in parallel to the DC/DC converter 20. The bridge 22 comprises a switching device 24 that is controlled by at least one Electronic Control Unit ("ECU" on figure 3) of the system.

However, the invention is basically applicable to any electrical system having two electrical networks with different voltage operating ranges. Accordingly, the "high voltage network" to which it is referred to in this paper could be a voltage network above 60V. However, this would imply to isolate it from the electrical ground of the vehicle (according to UN ECE Regulation No. 100, also referred to as R100), and to use a bridge relay capable of connecting both the positive and negative poles of the two networks with each other.

The switching device 24 includes at least one Normally Open switch ("NO" switch). In the embodiment of figures 3 to 7, the switching device 24 includes two switching modules 24A and 24B connected in series. A first module 24A includes a first normally open switch 26A and a first diode 28A connected in parallel and the second module 24B includes a second normally open switch 26B and a second diode 28B connected in parallel.

Typically, the first diode 28A allows current to flow from the high-voltage network 6 to the low-voltage network 8 and the second diode 28B allows current to flow from the low-voltage network 8 to the high-voltage network 6.

In the example, at least the first normally open switch 26A or the second normally open switch 26B is a transistor, in particular a MOSFET. Basically, both switches 26A and 26B are transistors, in particular MOSFETs.

As shown on figure 3, the first transistor 24A includes a drain connector D(1), a source connector S(1) connected to the high-voltage network 6 and a Gate connector G(1) connected to the ECU. Similarly, the second transistor 24B includes a drain connector D(2), a source connector S(2) connected to the low-voltage network 8 and a Gate connector G(2) connected to the ECU. In known manner, the transistors 24A and 24B are such that a current is only enabled from the Drain to the Source (and not from the Source to the Drain).

A transistor is controlled by applying a positive voltage to its gate. When this voltage exceeds a certain value, it becomes conducting (between drain D and source S) and allows the current to flow. Between drain D and source S, the transistor behaves almost like a wire. When the gate voltage is at 0V, the transistor is an open switch.

On figures 4 and 5, point A denotes a point connected to the source S(1) of the first transistor 26A, while point B denotes a point connected to the source S(2) of the second transistor 26B.

In the example, the ECU controls the voltage at the Gate connector of each transistor 26A, 26B. In a variant not shown, the system may include one ECU for each transistor, i.e. two distinct ECUs.

In the embodiment of the figures, at least one of the electric auxiliaries (eAux#1, eAux#2) of the high-voltage network 6 (i.e. connected to the high voltage battery 14), typically the power steering system 10, is compatible with both the high-voltage network and the low-voltage network. This means that such electric auxiliary 10, which is said to be a "critical" auxiliary, can be powered from a 48V electric source or a 24V electric source. In other words, such electric auxiliary 10 has a supply voltage range extending at least from 24V to 48V. In practice, the electric auxiliary 10 has a supply voltage range extending between 20V and 50V.

The functioning of the electric system 4, i.e. the method of control of the electric system 4, is described hereafter.

### Pre-charging sequence:

When the engine is turned on, a pre-charging of the high-voltage network 6 is achieved by the low-voltage network 8 through the DCDC converter 20. More precisely, the thermal engine can be started using the electric machine 12 or a separate starter (not shown).

When a starter is used to start the engine, the engine, once started, drives an alternator that can be used to produce some electrical energy to be transferred to the high voltage network 6 through the DCDC converter 20. In variant, the electrical energy that is transferred to the high voltage network 6 may be drawn from the low voltage battery 18. In this example, the high voltage network 6 could be enabled before starting the thermal engine.

When the engine is started by the electric machine 12, some electrical energy is normally drawn from the high-voltage battery 14 to power up the electric machine 12 so that, in turn, it can drive the engine crankshaft in rotation and initiate the combustion.

This means that the DCDC converter 20 is operated in boost mode to deliver electric energy to the high-voltage network 6, in order to increase the voltage of network 6 up to the operational voltage, which can be close to 48V.

Advantageously, the electric machine 12 is somehow connected to the engine crankshaft, directly or indirectly (for example through a pulley). During this pre-charging sequence, the switching device 24 remains fully open, as represented on figure 4.

### Pre-charging sequence has failed:

If the pre-charging sequence is aborted, i.e. if the pre-charging sequence cannot be achieved correctly, then it is considered that the high-voltage network 6 is "disabled".

In order to detect that the pre-charging sequence has failed, the electric consumers, or auxiliaries 10 and 16 advantageously permanently report voltage measurements to the ECU. In known manner, voltage measurements can be achieved through various means, such as Hall sensors. Basically, such Hall sensors can be integrated into said electric auxiliaries 10, 16. Preferably, the switching device 24 can also report relevant voltage and current measurements to the ECU.

If the high-voltage network 6 cannot be charged up to its operational voltage, i.e. that the high-voltage battery 14 has failed to close its contactors, then the ECU has to compile a backup routine (fall back mode).

When a starter is used, the engine can normally be started regardless of the status of the high-voltage network 6, i.e. the engine can be started even though the high-voltage network 6 is disabled. A problem may be that the DCDC converter 20 is somehow malfunctioning. In such configuration, it can be decided to bypass the DCDC converter 20 in order to achieve the pre-charging sequence through the bridge 22. Precisely, the switch 26A is closed. This means that the switch 26A is switched by the ECU from an open status to a closed status. The transistor 26A therefore becomes conductive between its drain connector D(1) and its source connector S(1).

After the switch 26A has been closed, the switching device 24 is in the configuration of figure 5. In such configuration, and since the transistor 26A is conductive, current flows from the low-voltage network 6 to the high-voltage network 8. Accordingly, current flows successively through the diode 28B and through the transistor 26A. On figure 5, the path of the electric current is represented by a thick dashed-line arrow.

Afterwards, the switch 26B can be closed in order to be able to use the electric machine 12 to recharge the low voltage network 8. The switching device 24 is then in the configuration of figure 6.

When the engine is normally started using the electric machine 12, the engine cannot be started if the high-voltage network 6 is disabled. A problem may be that the DCDC converter 20 is somehow malfunctioning. In such configuration, it can also be decided to bypass the DCDC converter 20 in order to achieve the pre-charging sequence through the bridge 22.

Precisely, and as shown on figure 5, the switch 26A is closed, i.e. switched by the ECU from an open status to a closed status. The transistor 26A therefore becomes conductive between its drain connector D(1) and its source connector S(1). In such configuration, and since the transistor 26A is conductive, current flows from the low-voltage network 6 to the high-voltage network 8. Accordingly, current flows successively through the diode 28B and through the transistor 26A.

In such configuration, some electric energy is drawn from the low voltage network 6 (typically from the low voltage battery 18) and transferred to the high voltage network through the bridge 22 in order to start the engine thanks to electrical machine 12. Then, as soon as the high voltage network 6 has reached its operational voltage, the electric machine 12 can be powered up to enable the engine start.

When the combustion is established (engine running), the engine drives the electric machine 12 operating as a generator to keep the high voltage network 6 enabled. The DCDC converter 20 can then be used to transfer electric energy from the high voltage network 6 to the low voltage network 8, if appropriate.

However, if the high voltage network 6 cannot be maintained to its nominal level, i.e. cannot be kept enabled, then switch 26B can be closed in order to transfer energy from the electric machine 12 to the low voltage network 8, so as to recharge the low voltage battery 18 and as to ensure that each electric consumer(s) 16 connected to the low voltage battery 18 is fully operational (i.e. correctly supplied with electricity).

### High-voltage network enabled:

However, If the pre-charging sequence has been achieved correctly, then the high-voltage network 6 is said to be "enabled" and the transistor 26A is closed (i.e. is switched by the ECU from an open status to a closed status): The transistor 26A therefore becomes conductive between its drain connector D(1) and its source connector S(1).

The switching device 24 is commuted from the configuration of figure 4 to the configuration of figure 5.

### High-voltage network fails during operation:

In the configuration of figure 5, the switching element 24 is said to be "armed". This means that, as soon as the voltage of the high-voltage network 6 drops below the low-voltage network 8, the switching device 24 automatically allows current from the low-voltage network 8 to the high-voltage network 6. This enables to bypass the DC/DC converter 20 and to power the at least one electric consumer 10 from the low-voltage network 8. By the term "automatically", it is meant that no switching operation is to be done and therefore that there is no time of response (immediate reaction) other than the physical phenomenon, which is very advantageous. As mentioned supra, the "critical" electric auxiliaries 10 that are connected to the high voltage battery 14 and that need to be kept operational even in the event of failure of the high voltage battery 14 are compatible with the voltage level of the high voltage network 6 and with that of the low voltage network 8.

Accordingly, if the high-voltage network 6 fails, the voltage of the high-voltage network 6 naturally drops from 48V to 24V. When the voltage of the high-voltage network 6 falls under that of the low-voltage network 8, the difference of potential between point B and point A on figure 4 becomes positive and current flows from the low-voltage network 8 to the high-voltage network 6 (Configuration of figure 5). Precisely, current flows successively through the diode 28B and through the transistor 26A. On figure 5, the path of the electric current is represented by a thick dashed-line arrow.

Basically, the electric machine 12, if still functional, can be used to power the electric consumers (or auxiliaries) of the high-voltage network 6 as long as possible. However, as soon as the electric machine 12 is no more capable of producing and regulating enough power, the voltage of the 48V network naturally drops below that of the 24V network 8 and the latter takes over or at least compensates the over-consumption of the electric auxiliaries 10 of the 48V network 6.

The current flowing from the low-voltage network can be used to power one or more critical electric auxiliaries 10 connected to the high-voltage battery 14, such as the power steering system, to keep it functional and avoid putting the driver in danger because of a steering control loss.

The advantage of bypassing the converter 20 is such situation is that any critical electric auxiliary 10 connected to the high-voltage battery 14 can receive enough power to work properly. Indeed, most DC/DC converters available on the market are not designed to provide a stabilized 48V voltage when the high-voltage battery 14 is disconnected. Therefore, the fact of bypassing the converter 10 enables to transmit a stable voltage to the high-voltage network 6 and to ensure that the critical auxiliaries 10 are powered with a stable voltage supply.

### High-voltage network reset while driving:

Considering that the high-voltage battery 14 is disabled, it can be tried to reset the high-voltage network 6 while driving. To do that, one idea would be to bypass the DC/DC converter by setting or keeping the switching device 24 in the configuration of figure 5. This would enable to create a 24V electric signal and to send it as a control signal to reset the high-voltage network 6. In detail, the idea would be first to switch off the high-voltage battery 14 as well as all of the 48V electric auxiliaries eAux#1, eAux#2 and switch them back on by using a (24V) control signal that would be generated by the low-voltage network 8 and sent through the bridge 22 (bypassing converter 10).

### Low-voltage network charging:

If it is determined that the problem comes from the high-voltage battery 14 and that the electric machine 12 is still functional, the high-voltage battery 14 can be disconnected from the high-voltage network 6 (i.e. the contactors of the battery 14 are opened) and the energy delivered by the electric machine 12 can be used to supply the low-voltage network 8, for example to recharge the low-voltage battery 18. To do that, the electric machine 12 is controlled to generate electric power at said low voltage (as an alternator would do). In addition, the second transistor 26B is closed (i.e. is switched by the ECU from an open status to a closed status): The transistor 26B therefore becomes conductive between its drain connector D(2) and its source connector S(2).

The switching device 24 therefore commutes from the configuration of figure 5 to the configuration of figure 6.

In that configuration, current can flow from the high-voltage network 6, typically from the electric machine 12, to the low-voltage network 8. Precisely, current flows successively through the diode 28A and through the transistor 26B. On figure 6, the path of the electric current is represented by a thick dashed-line arrow.

### Using 48V electric auxiliaries while vehicle is parked:

Another possible mode of operation would be to use the low-voltage network 8 to power one or more of the electric auxiliaries eAux#1, eAux#2 connected to the high-voltage battery 14 while the engine is off.

Indeed, when the thermal engine of the vehicle 2 is off, the high-voltage network 6 is disabled since the electric machine 12 is not operational (as it is somehow mechanically connected to the engine). Therefore, the electric auxiliaries eAux#1, eAux#2 connected to the high-voltage battery 14 cannot be powered. However, there is some electric devices, such as the Air-Conditioning (AC) system, that the driver may want to use even though the vehicle is parked and the engine off. Typically, when the driver sleeps at night inside the truck cabin, he may want to use the AC system to sleep tight.

To enable that, an option would be to use the DC/DC converter 10 to produce 48V voltage from the 24V battery 18. However, it is known that the efficiency of the converter 10 is less than 100%, which means that some energy is necessarily lost during voltage conversion. Basically, in order to provide the Air-Conditioning system with a power of 500W, the input power of the converter 10 should be at least superior to 500W, which means that 100W are lost during the voltage conversion.

Accordingly, a better solution would be to use the bridge 22 to bypass the converter 10 and directly power the AC system using 24V energy, that is applying a 24V voltage to its connector. To do that, the AC system should obviously be compatible with both a 24V and a 48V voltage supply. This advantageously enables to make energy savings.

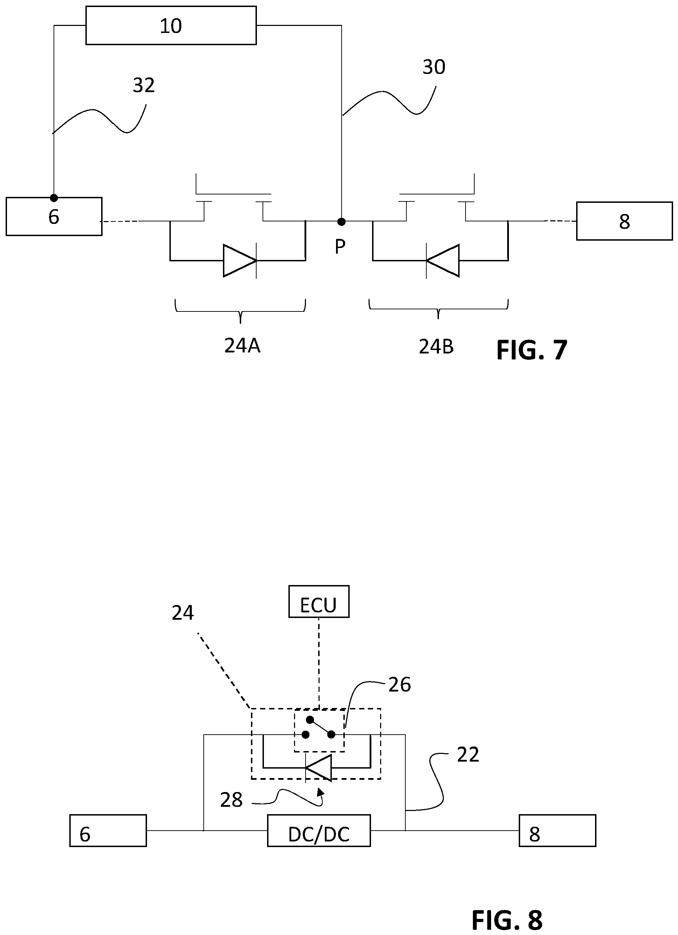

In one alternative embodiment represented on figure 7, at least one electric consumer 10 is permanently connected both to the high-voltage network 6 and to the low-voltage network 8. This means that the electric auxiliary 10 is a multi-input electric device, comprising a first connector to be connected to a high-voltage cable 32 and a second connector to be connected to a low-voltage cable 30. Preferably, the power supplied to the electric auxiliary 10, that could be the power steering system, is equally distributed between cables 30 an 32.

Advantageously, the low-voltage cable 30 is connected to the bridge 22, at a point P between the two switching modules 24A and 24B.

Accordingly, if the high-voltage network 8 fails and the ECU is malfunctioning, the electric auxiliary 10 remains powered by the low-voltage network 6, regardless of the status of the switches 26A and 26B. In particular, the electric auxiliary 10 can remain powered even when the switch 26B is open (such as represented on figure 7). Indeed, current can be drawn from the electric auxiliary 10 through the diode 28B.

This advantageously defines a second level of safety.

Figure 8 represents an alternative embodiment in which the switching device 24 includes a normally open switch 26, typically an electromechanical switch, and a diode 28 connected in parallel with the normally open switch 26. Said diode 28 allows current from the low-voltage network 8 to the high-voltage network 6.

Optionally, in a variant not-shown, the bridge 22 may be equipped with an additional switch, for example an electromechanical switch, connected in series with the switching device 24. In the example, such additional switch would be controlled by an ECU, which may be the same than that controlling the switch 26 or a different ECU.

It is to be understood that the present invention is not limited to the embodiments described above and illustrated in the drawings; rather, the skilled person will recognize that many changes and modifications may be made within the scope of the appended claims.

## Claims

1. A connection interface (20, 22) between a high voltage network (6) and a low voltage network (8) of a hybrid electric vehicle (2), said connection interface comprising a bidirectional DC/DC converter (20) for transferring power from the high-voltage network to the low-voltage network, and inversely,
**characterized in that** the connection interface further includes a bridge (22) for bypassing the DC/DC converter (20), said bridge being connected in parallel to the DC/DC converter and **in that** said bridge comprises an electronically controlled switching device (24).

2. The connection interface according to claim 1, **characterized in that** the switching device (24) includes at least one normally open switch (26A, 26B; 26).

3. The connection interface according to claim 2, **characterized in that** the switching device (24) further includes at least one diode (28B; 28) connected in parallel with the normally open switch (26B; 26) and **in that** said diode allows current from the low-voltage network to the high-voltage network.

4. The connection interface according to claim 2 or 3, **characterized in that** the normally open switch is a transistor (26A, 26B) or an electromechanical switch (26).

5. The connection interface according to any previous claim, **characterized in that** the switching device (24) includes two switching modules connected in series and **in that** a first module (24A) includes a first normally open switch (26A) and a first diode (28A) connected in parallel and the second module (24B) includes a second normally open switch (26B) and a second diode (28B) connected in parallel.

6. The connection interface according to previous claim, **characterized in that** the first diode (28A) allows current from the high-voltage network to the low-voltage network and the second diode (28B) allows current from the low-voltage network to the high-voltage network.

7. An electrical system (4) for a hybrid electric vehicle (2), said system comprising:
- a low voltage network (8) comprising a low voltage battery (18),
- a high voltage network (6) comprising at least one electric consumer (10), an electric machine (12) and a high voltage battery (14), wherein the at least one electric consumer (10) can be powered by the high voltage battery (14) or the low voltage battery (18),
- a connection interface (20, 22) between the high voltage network and the low voltage network,
**characterized in that** the connection interface is according to any previous claim.

8. The electrical system according to claim 7, comprising a connection interface according to claim 5 or 6, **characterized in that** the system further includes an additional electric supply line (30) to be connected between said at least one electric consumer (10) and a point (P) between the two switching modules (24A, 24B).

9. The electrical system according to claim 7 or 8, **characterized in that** the high-voltage network is a 48V network and the low-voltage network is a 24V network.

10. The electrical system according to any one of the claims 7 to 9, comprising a connection interface according to claim 2, **characterized in that** the electric machine (12) can be controlled to generate electric power at said high voltage or said low voltage and **in that** the normally open switch (26B; 26) is closed only when the high-voltage battery (14) is disabled and only when the electric machine (12) generates electric power at said low voltage.

11. An electric vehicle, typically a hybrid electric vehicle (2), comprising an electrical system (4) according to any one of the claims 7 to 10.

12. The vehicle according to claim 11, **characterized in that** the vehicle is a 48V mild hybrid electric vehicle.

13. The vehicle according to claim 11 or 12, **characterized in that** the vehicle is a heavy-duty vehicle, such as a truck.

14. A method for controlling an electrical system (4) according to claims 7 to 10, **characterized in that** the switching device (24) is controlled to automatically allow current from the low-voltage network (8) to the high-voltage network (6) as soon as the voltage of the high-voltage network drops below the low-voltage network, so as to bypass the DC/DC converter (20) and to enable said at least one electric consumer (10) to be powered by the low-voltage battery (18).
